# EUROPEAN PATENT SPECIFICATION

(11) **EP 3 651 421 B1**
(45) Date of publication and mention of the grant of the patent: **10.05.2023**
(21) Application number: 19188372.7
(22) Date of filing: 19.05.2014
(51) Int. Cl.: H04L 51/00, H04N 21/414, H04N 21/436, H04N 21/44, G06F 16/438

(54) **MULTIMEDIA DISPLAY METHOD, APPARATUS, AND DEVICE**
MULTIMEDIA-ANZEIGEVERFAHREN, VORRICHTUNG UND VORRICHTUNG
PROCÉDÉ, APPAREIL ET DISPOSITIF D'AFFICHAGE MULTIMÉDIA

(43) Date of publication of application: 13.05.2020
(62) Divisional of application: 14892448.3
(73) Proprietor: HUAWEI TECHNOLOGIES CO., LTD., Shenzhen, Guangdong 518129 (CN)
(72) Inventor: Qin, Yirong, Shenzhen, Guangdong 518129 (CN); Chen, Minjiang, Shenzhen, Guangdong 518129 (CN)
(74) Representative: Epping - Hermann - Fischer

(56) References cited:
- WO-A1-2013/192389
- US-A1- 2006 010 167
- US-B1- 6 845 398

## Description

### TECHNICAL FIELD

The present invention relates to the field of electronic information technologies, and in particular, to a multimedia display method, user equipment, and non-transitory computer-readable storage medium.

### BACKGROUND

Currently, an in-car system based on an Android platform is already very popular. Generally, the in-car system can play only existent multimedia files in the in-car system. In order to widen the range of multimedia files that can be played by the in-car system and enable the in-car system to play multimedia files in other service devices, for example, use the in-car system to play a multimedia file in a mobile phone, and in order to enable the in-car system to play multimedia files in service devices such as a mobile phone, a DLNA (Digital Living Network Alliance, Digital Living Network Alliance) technology in which a DLNA service device collaborates with a DLNA in-car system to play multimedia files in service devices such as a mobile phone by using the in-car system is generally applied in the prior art. The DLNA in-car system displays multimedia type information. After receiving a multimedia type selection command of a user, the DLNA in-car system displays DLNA service devices that are searched out. After receiving a DLNA service device selection command of the user, the DLNA in-car system displays a catalog directory in a selected DLNA server, for example, a catalog directory based on path, based on artist, or based on album. After receiving a catalog directory selection command of the user, the DLNA in-car system displays a multimedia file list in the catalog directory. The DLNA in-car system receives a multimedia file selection command of the user, and selects and plays a multimedia file in the multimedia file list.

However, in the prior art, more than one DLNA service device generally exists in a range covered by a wireless network of the DLNA in-car system. Before accessing the DLNA service device, the DLNA in-car system does not know which multimedia files exist in the DLNA service device. If a DLNA service device includes no multimedia file desired by the user, the DLNA in-car system needs to return to an interface that displays the DLNA service device list and accesses another DLNA service device, receives a catalog directory selection command and then a multimedia file selection command of the user again, and selects and plays a multimedia file. In a case in which multiple DLNA service devices exist, the DLNA in-car system needs to access the DLNA service devices repeatedly. Every time a DLNA service device is accessed, multiple commands of the user need to be received before the desired multimedia file can be played. It takes a long time for the DLNA in-car system to search for the multimedia file, which reduces efficiency of searching for the multimedia file.

Document US 6,845,398 B1 provides a wireless device, system and method for receiving and playing multimedia files streamed from a multimedia server over a wireless telecommunications network. A desired multimedia file is selected from one or more multimedia files stored in the multimedia server, which server is operatively connected to the wireless telecommunications network. Successive blocks of data from the desired multimedia file are streamed over the wireless telecommunications network in a digitized and compressed format and received by the wireless telecommunications device. The received blocks of data from the streamed multimedia file are temporarily stored in a buffer in the wireless device, decoded and decompressed, and successively played through an audio and/or video output in the wireless device. The wireless device monitors the blocks of data stored in the buffer and signals the wireless telecommunications network to increase the rate that the data blocks are transmitted over the wireless network in the event that the data stored in the buffer falls below a minimum threshold level.

Document WO 2013/192389 A1 provides a method and apparatus for generating a personalized radio channel playlist by simultaneously buffering multiple received channels from one or more source streams, and then selecting songs or tracks to playback from the buffered channels. Users can specify favorite channels for building their personal playlists, or multiple default playlist channels can be provided by genre or channels related in some other way. Navigation tools permit users to skip ahead and backward in the playback stream. A personalized radio channel playlist can be implemented as (1) content selected from buffered channels based on user preferences for artists, songs and the like, or (2) as a Mix Channel in which content from selected buffered channels is automatically mixed for playback in response to selection of a preset button assigned to the Mix Channel.

### SUMMARY

Embodiments of the present invention provide a multimedia display method, user equipment, and non-transitory computer-readable storage medium, which can reduce time spent by user equipment in searching for a multimedia file and improve efficiency of searching for the multimedia file. The present invention is defined by the attached set of claims. Embodiments and aspects which are not covered by the invention should be considered as examples useful for understanding the invention.

In the multimedia display method, apparatus, and device provided in the embodiments of the present invention, user equipment receives a multimedia type selection command, searches for a service device in a specified range, determines a service device accessible with access permission, searches the service device accessible with access permission for a multimedia file corresponding to the multimedia type selection command, and generates and displays a multimedia file list according to the multimedia file corresponding to the multimedia type selection command. In the prior art, a DLNA service device needs to be accessed repeatedly, and every time the DLNA service device is accessed, multiple commands of a user need to be received before a required multimedia file can be played. Compared with the prior art, in this solution, after receiving a multimedia type selection command, the user equipment traverses and accesses all found service devices accessible with access permission, generates and displays a multimedia file list according to a multimedia file that is corresponding to the multimedia type selection command and is in the service device, and displays found multimedia files at a time, thereby avoiding a problem of accessing the DLNA service device repeatedly, avoiding a need of receiving multiple commands of the user every time the DLNA service device is accessed, reducing time spent by the user equipment in searching for a multimedia file and, improving efficiency of searching for the multimedia file.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG 1 is a flowchart of a multimedia display method according to an embodiment of the present invention;
FIG 2a is a schematic diagram of an interface displayed by user equipment in the prior art;
FIG 2b is a schematic diagram of an interface displayed by user equipment according to an embodiment of the present invention;
FIG 3 is a flowchart of a multimedia display method according to another embodiment of the present invention;
FIG 3a is a schematic diagram of an example of a file directory according to another embodiment of the present invention;
FIG 4 is a flowchart of a multimedia display method according to another embodiment of the present invention;
FIG 4a is a schematic diagram of an example of a file directory according to another embodiment of the present invention;
FIG 5 is a flowchart of a multimedia display method according to another embodiment of the present invention;
FIG 6 is a schematic structural diagram of a multimedia display apparatus according to an embodiment of the present invention;
FIG 7 is a schematic structural diagram of a multimedia display apparatus according to another embodiment of the present invention;
FIG 8 is a schematic structural diagram of a multimedia display apparatus according to another embodiment of the present invention;
FIG 9 is a schematic structural diagram of a multimedia display apparatus according to another embodiment of the present invention; and
FIG 10 is a schematic structural diagram of a multimedia display device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention.

The technical solution provided in the embodiments of the present invention is applied to user equipment. The user equipment communicates with a service device accessible with access permission, and the service device stores a multimedia file. There may be multiple service devices, and the user equipment may acquire a multimedia file from the service device and plays it on the user equipment. The user equipment may be an in-car system on which a DLNA (Digital Living Network Alliance, Digital Living Network Alliance) client is installed or another device that can communicate with the service device. The service device may be a mobile phone, a tablet computer, a notebook computer, and the like. The user equipment and the service device communicates by using a wireless communication technology such as Wi-Fi (wireless local area network), Bluetooth, or the like.

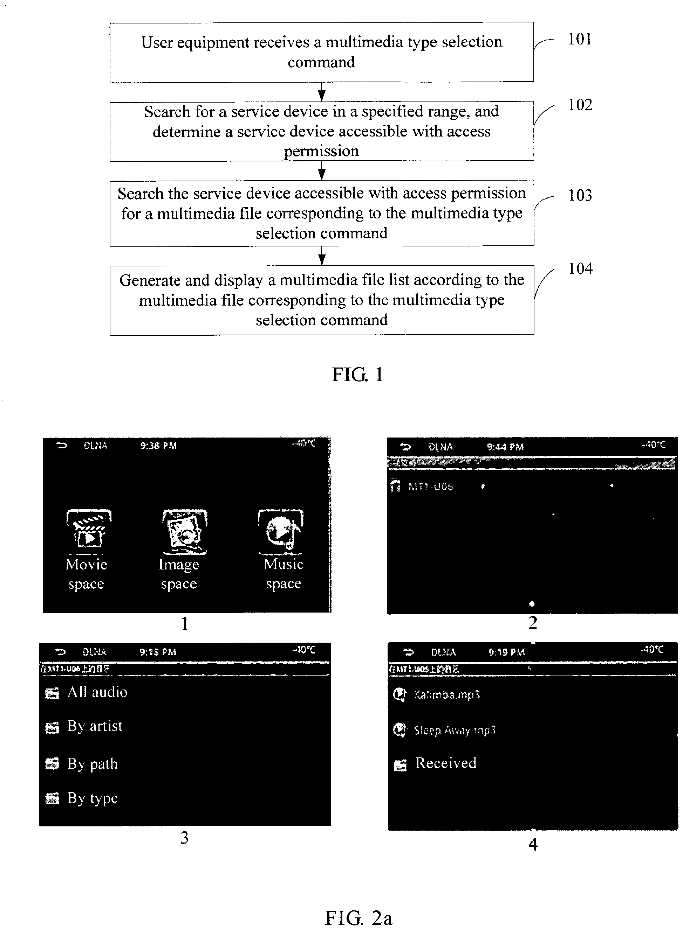

An embodiment of the present invention provides a multimedia display method, as shown in FIG 1, the method includes:
101. User equipment receives a multimedia type selection command.

The multimedia type selection command is used to select a multimedia type, and the multimedia type selection command may be set and sent by a user. For example, the user equipment displays three types of multimedia file icons: music, movie, and image. The user sends a multimedia type selection command to select a music icon, and therefore, the user equipment receives the multimedia type selection command that is used to select a music multimedia file.

102. Search for a service device in a specified range, and determine a service device accessible with access permission.

The service device stores a multimedia file. Receiving a multimedia type selection command is a condition of triggering search for a service device. After receiving the multimedia type selection command, the user equipment starts to search for a service device in a specified range. The user equipment searches for the service device in the specified range, where the specified range is a range in which the user equipment can communicate with the service device, a range covered by a wireless local area network connected to the user equipment; and the specified range may also be a distance range set by the user, for example, a range in a circle with a center at the user equipment and a radius equal to 5 meters.

It should be noted that the user equipment searches out multiple service devices, and needs to determine service devices accessible with access permission. For example, the user equipment is an in-car system, and the in-car system searches out a mobile phone A, a mobile phone B, and a tablet computer C. The mobile phone A, the mobile phone B, and the tablet computer C are all service devices; however, only the mobile phone A and the tablet computer C have matching clients installed on them and are accessible with access permission, and therefore, the in-car system can access only the mobile phone A and the tablet computer C.

103. Search the service devices accessible with access permission for a multimedia file corresponding to the multimedia type selection command.

The user equipment searches the service devices accessible with access permission for a multimedia file corresponding to the multimedia type selection command. For example, multimedia files stored in the service devices include a music file, a video file, an image file, and the like. The multimedia type selection command selects a music file, and therefore, all music files in the found service device accessible with access permission are acquired from the found service device accessible with access permission. When searching the service devices accessible with access permission for the multimedia file corresponding to the multimedia type selection command, the user equipment may successively perform the search in multiple service devices accessible with access permission, or may concurrently perform the search in the multiple service devices accessible with access permission to further improve search efficiency. The user equipment and the service device may also communicate and exchange data and messages by using a UPNP (Universal Plug and Play, Universal Plug and Play) protocol.

104. Generate and display a multimedia file list according to the multimedia file corresponding to the multimedia type selection command.

The multimedia list includes name information of the multimedia file corresponding to the multimedia type selection command. For example, when the multimedia list is generated and displayed, the user equipment does not download the multimedia file that is corresponding to the multimedia type selection command and is in the service device into the user equipment. For example, the multimedia type selection command instructs to select a video file, and therefore, the multimedia list displayed by the user equipment includes name information of video files in all service devices accessible with access permission. The multimedia list includes at least the name information of the multimedia file, and may further include other information such as an album or author of the multimedia file. There are multiple types for the multimedia file, such as a music file, an image file, and a video file.

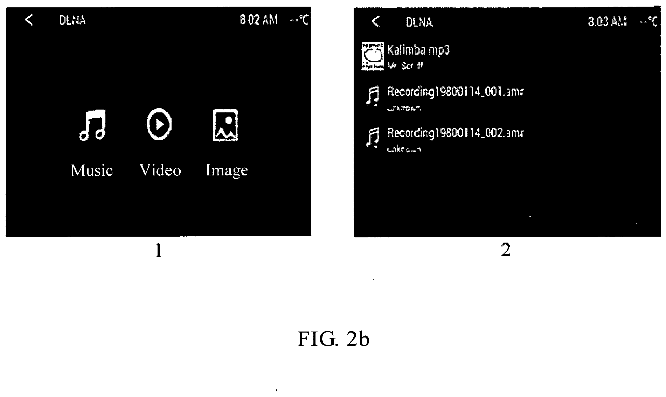

Specifically, in the prior art, as shown in FIG 2a, an operation command of a user is received, and user equipment needs to display successively four interfaces numbered 1-4. The interface numbered 1 is a multimedia type selection interface, the interface numbered 2 is a service device selection interface, the interface numbered 3 is a directory type selection interface, and the interface numbered 4 is a multimedia file list interface. When one service device is accessed, the user equipment needs to receive an operation command four times before a multimedia file desired for playing can be selected on the multimedia file list interface. If a user terminal accesses N service devices successively, the user equipment needs to receive the operation command 4*N times and perform an operation 4*N times. However, in this solution, as shown in FIG 2b, the user equipment needs only to display successively two interfaces numbered 1 and 2. The interface numbered 1 is a multimedia type selection interface, and the interface numbered 2 is a multimedia file list interface. The user equipment needs to receive the operation command only two times before the multimedia file desired for playing can be selected on the multimedia file list interface. Even if the user equipment accesses multiple service devices, because selection of the service device is not required, the user equipment still needs to receive the operation command only two times before the multimedia file desired for playing can be selected on the multimedia file list interface.

In the multimedia display method provided in this embodiment of the present invention, user equipment receives a multimedia type selection command, searches for a service device in a specified range, determines a service device accessible with access permission, searches the service device accessible with access permission for a multimedia file corresponding to the multimedia type selection command, and generates and displays a multimedia file list according to the multimedia file corresponding to the multimedia type selection command. In the prior art, a DLNA service device needs to be accessed repeatedly, and every time the DLNA service device is accessed, multiple commands of a user need to be received before a required multimedia file can be played. Compared with the prior art, in this solution, after receiving a multimedia type selection command, the user equipment traverses and accesses all found service devices accessible with access permission, generates and displays a multimedia file list according to a multimedia file that is corresponding to the multimedia type selection command and is in the service device, and displays found multimedia files at a time, thereby avoiding a problem of accessing the DLNA service device repeatedly, avoiding a need of receiving multiple commands of the user every time the DLNA service device is accessed, reducing time spent by the user equipment in searching for a multimedia file, and improving efficiency of searching for the multimedia file.

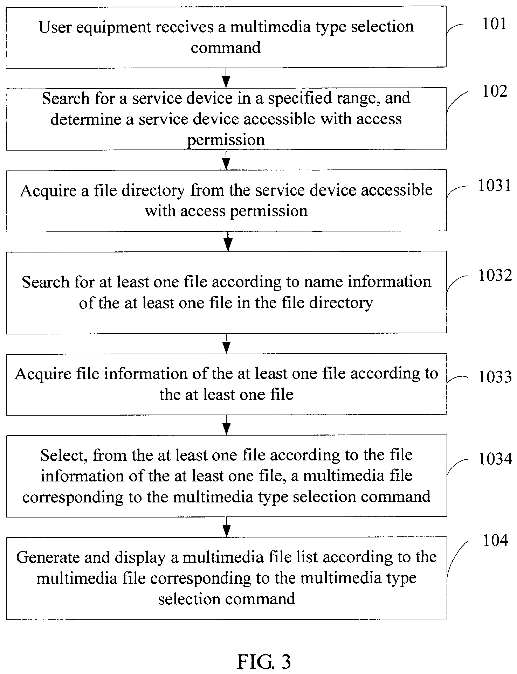

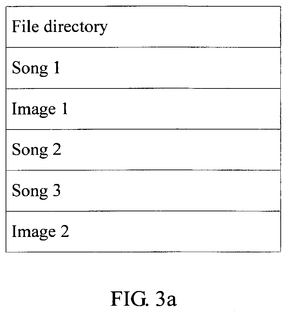

Further, on the basis of the solution shown in FIG 1, another embodiment of the present invention further provides a specific solution to a multimedia display method. This solution gives more details about an execution process of 103 in the solution shown in FIG 1, where 103 may be specifically implemented by 1031 to 1033, and as shown in FIG 3, includes:
1031. Acquire a file directory from the service device accessible with access permission.

In specific application of this embodiment, the service device uses a file directory to display files stored in the service device, where the file directory includes name information of at least one file in the service device, and the file includes a multimedia file and may further include a file of another type, such as an executable program file and a text file. For example, as shown in FIG 3a, the file directory includes name information of five files which are separately "song 1", "image 1", "song 2", "song 3", and "image 2". The user equipment acquires a file directory from the service device accessible with access permission. The file directory is essentially an index that is of files in the service device and is created by the service device. That is, the index is a mapping relationship between name information of a file and a physical location of the file. Each file in the service device has a corresponding entry in the file directory. The entry includes at least the name information of the file, and may further include information such as an internal identifier of the file, a file type, a file storage address, a file length, access permission, creation time, and access time. A corresponding file may be found in a physical memory according to the name information of the file in the file directory.

1032. Search for at least one file according to name information of the at least one file in the file directory.

A physical memory of the service device may be searched for a corresponding file according to the name information of the file in the file directory in the service device.

1033. Acquire file information of the at least one file according to the at least one file.

The file information of the at least one file is used to distinguish a type of the at least one file. According to the found file, the file information of the file may be acquired by using a property of the file. The file information is used to distinguish the file type. The file information may be file format information such as txt (Text File, text file), avi (Audio Video Interleaved, audio video interleaved), MP3 (Moving Picture Experts Group Audio Layer III, moving picture experts group audio layer III), and GIF (Graphics Interchange Format, graphics interchange format). The file information may also be identification information that identifies a multimedia file type. For example, the user equipment and the service device pre-agrees to set identification information that identifies a multimedia file type, uses a character A to identify a music file, uses a character B to identify an image file, and uses a character C to identify a video file.

1034. Select, from the at least one file according to the file information of the at least one file, a multimedia file corresponding to the multimedia type selection command.

According to the file information of at least one file, the user equipment may determine a type of the file; and therefore, selects the multimedia file that is corresponding to the multimedia type selection command and is in plenty of files in the service device. For example, the files stored in the service device include a text file, an image file, a video file, a music file, and the like. When the file information is file format information, the multimedia type selection command instructs to select a video file, and therefore, file format information of all files in the service device is acquired. The service device stores files whose file format information is txt (Text File, text file), avi (Audio Video Interleaved, audio video interleaved) files, MP3 (Moving Picture Experts Group Audio Layer III, moving picture experts group audio layer III) files, FLV (Flash Video, a streaming media format) files, and GIF (Graphics Interchange Format, graphics interchange format) files. The files whose file format information is avi and FLV are video files, and therefore, the user equipment selects files whose file format information is avi and FLV in all files.

In the multimedia display method provided in this embodiment of the present invention, user equipment receives a multimedia type selection command; searches for a service device in a specified range; determines a service device accessible with access permission, acquires a file directory from the service device accessible with access permission, and therefore, acquires file information of a file in the service device; selects a multimedia file corresponding to the multimedia type selection command by using the file information; and generates and displays a multimedia file list according to the multimedia file corresponding to the multimedia type selection command. In the prior art, a DLNA service device needs to be accessed repeatedly, and every time the DLNA service device is accessed, multiple commands of a user need to be received before a required multimedia file can be played. Compared with the prior art, in this solution, after receiving a multimedia type selection command, the user equipment traverses and accesses all found service devices accessible with access permission, generates and displays a multimedia file list according to a multimedia file that is corresponding to the multimedia type selection command and is in the service device, and displays found multimedia files at a time, thereby avoiding a problem of accessing the DLNA service device repeatedly, avoiding a need of receiving multiple commands of the user every time the DLNA service device is accessed, reducing time spent by the user equipment in searching for a multimedia file, and improving efficiency of searching for the multimedia file.

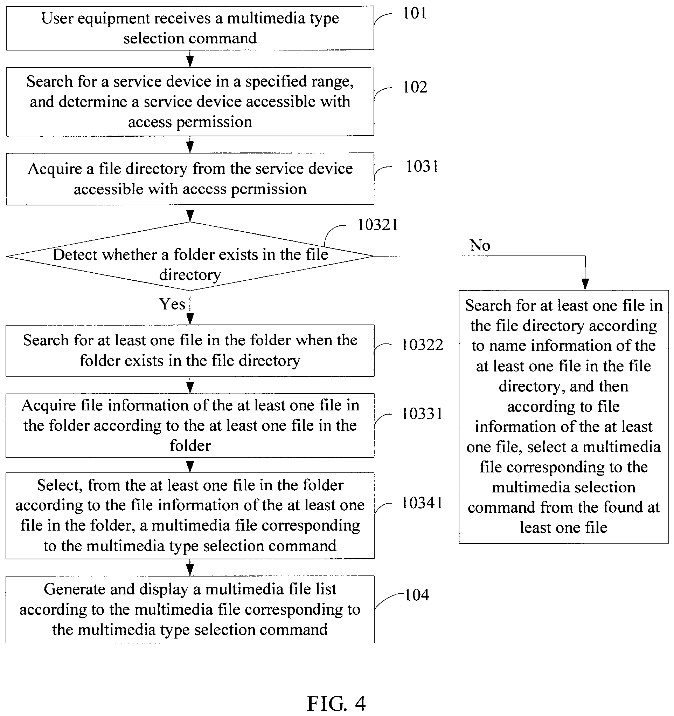

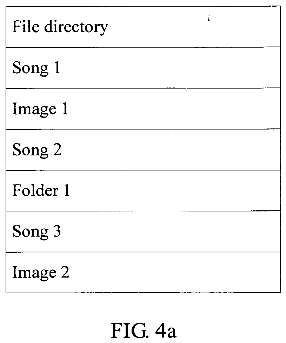

Still further, on the basis of the solution shown in FIG 3, an embodiment of the present invention further provides a specific solution to a multimedia display method. This solution gives more details about an execution process of 1032 to 1034 in the solution shown in FIG 3, where 1032 may be specifically implemented by 10321 to 10322, 1033 may be specifically implemented by 10331, and 1034 may be specifically implemented by 10341. As shown in FIG 4, the implementation process includes:
10321. Detect whether a folder exists in the file directory.

A folder may still exist in the file directory, and the folder includes at least one file. In order to prevent omission of a multimedia file that is corresponding to the multimedia type selection command and is in the folder at the time of selecting the multimedia file corresponding to the multimedia type selection command, whether a folder exists in the file directory needs to be detected; and if a folder exists, the folder needs to be opened and at least one file in the folder needs to be selected.

10322. Search for at least one file in the folder when the folder exists in the file directory.

When a folder exists in the file directory, the folder is opened and at least one file in the folder is searched for. For example, as shown in FIG 4a, the file directory includes not only name information of five files: "song 1", "image 1", "song 2", "song 3", and "image 2", but also a folder "folder 1", and therefore, the folder 1 is opened and a file in the folder 1 is searched for. When no folder exists in the file directory, it is necessary only to search for at least one file in the file directory according to the name information of the at least one file in the file directory, and then according to the file information of the at least one file, select a multimedia file that is corresponding to the multimedia selection command and is in the found at least one file.

It should be noted that the folder may further include a subfolder. In this case, the subfolder is opened and at least one file in the subfolder is searched for until the folder includes no subfolder. 10331. Acquire the file information of the at least one file in the folder according to the at least one file in the folder.

The file information is one of properties of the file. In the service device, the user equipment can acquire the file information of the at least one file in the folder according to the at least one file in the folder.

10341. Select, from the at least one file in the folder according to the file information of the at least one file in the folder, a multimedia file corresponding to the multimedia type selection command.

The multimedia file corresponding to the multimedia type selection command is selected from the at least one file in the folder by using the file information of the at least one file in the folder. If the folder still includes a subfolder, the subfolder is opened, and a multimedia file corresponding to the multimedia type selection command is selected from at least one file in the subfolder according to file information of the at least one file in the subfolder, which goes on until the folder includes no subfolder.

In the multimedia display method provided in this embodiment of the present invention, user equipment receives a multimedia type selection command; searches for a service device in a specified range; determines a service device accessible with access permission, acquires a file directory from the service device accessible with access permission, and therefore, acquires file information of a file in the service device; selects a multimedia file corresponding to the multimedia type selection command by using the file information; and generates and displays a multimedia file list according to the multimedia file corresponding to the multimedia type selection command. In the prior art, a DLNA service device needs to be accessed repeatedly, and every time the DLNA service device is accessed, multiple commands of a user need to be received before a required multimedia file can be played. Compared with the prior art, in this solution, after receiving a multimedia type selection command, the user equipment traverses and accesses all found service devices accessible with access permission, generates and displays a multimedia file list according to a multimedia file that is corresponding to the multimedia type selection command and is in the service device, and displays found multimedia files at a time, thereby avoiding a problem of accessing the DLNA service device repeatedly, avoiding a need of receiving multiple commands of the user every time the DLNA service device is accessed, reducing time spent by the user equipment in searching for a multimedia file, and improving efficiency of searching for the multimedia file. When the file directory includes a folder, the folder is opened and a multimedia file corresponding to the multimedia type selection command is selected, thereby preventing omission of the multimedia file corresponding to the multimedia type selection command.

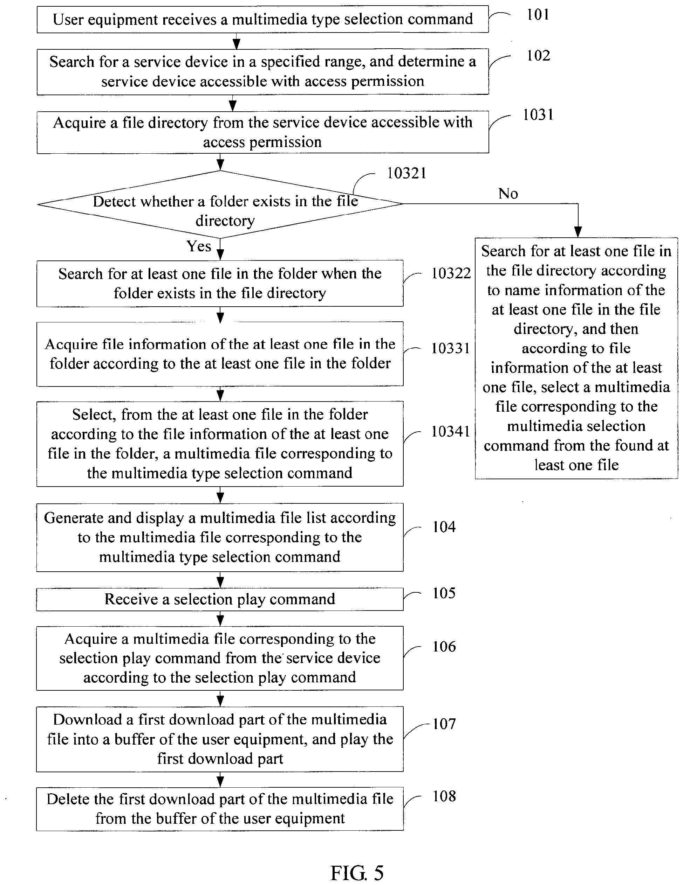

In addition, on the basis of the solution shown in FIG 4, an embodiment of the present invention further provides a specific solution to a multimedia display method. In this solution, 105 to 108 may be added, and a multimedia file in a service device may be downloaded to user equipment and played. As shown in FIG 5, the specific solution includes:
105. Receive a selection play command.

The selection play command is used to select a to-be-played multimedia file from the multimedia list.

106. Acquire a multimedia file corresponding to the selection play command from the service device according to the selection play command.

107. Download a first download part of the multimedia file into a buffer of the user equipment, and play the first download part.

The first download part may be set as a part in a preset time in the multimedia file, so as to enable the user equipment to implement a function of playing while downloading. For example, the multimedia file is a video file. When the video file is played to 1 minute, the user equipment needs only to download a part between 1 minute and 1 minute 30 seconds in the video file from the service device, and so on. A part to be downloaded in real time is always the part of 30 seconds after current time of playing the video. In this way, it can be avoided that an entire multimedia file is downloaded by the user into the user equipment, which occupies plenty of storage resources of a memory in the user equipment. The first download part may also be set as a part of a preset size in the multimedia file. For example, the first download part may be a part of a 10 M size that is to be played immediately in the multimedia file.

108. Delete the first download part of the multimedia file from the buffer of the user equipment. After the first download part of the multimedia file is played, the first download part is deleted from a buffer of the user equipment in real time, thereby preventing an increase in a burden on the memory of the user equipment and reducing occupied storage resources.

In the multimedia display method provided in this embodiment of the present invention, user equipment can receive a multimedia type selection command; search for a service device in a specified range; determine a service device accessible with access permission, acquire a file directory from the service device accessible with access permission, and therefore, acquire file information of a file in the service device; select a multimedia file corresponding to the multimedia type selection command by using the file information; and generate and display a multimedia file list according to the multimedia file corresponding to the multimedia type selection command. When a multimedia file is played, it may be downloaded while being played, and a played part of the multimedia file may be deleted. In the prior art, a DLNA service device needs to be accessed repeatedly, and every time the DLNA service device is accessed, multiple commands of a user need to be received before a required multimedia file can be played. Compared with the prior art, in this solution, after receiving a multimedia type selection command, the user equipment traverses and accesses all found service devices accessible with access permission, generates and displays a multimedia file list according to a multimedia file that is corresponding to the multimedia type selection command and is in the service device, and displays found multimedia files at a time, thereby avoiding a problem of accessing the DLNA service device repeatedly, avoiding a need of receiving multiple commands of the user every time the DLNA service device is accessed, reducing time spent by the user equipment in searching for a multimedia file, and improving efficiency of searching for the multimedia file. In addition, in a process of playing, storage resources occupied in the user equipment are reduced maximally, and a storage burden on a memory of the user equipment is also relieved.

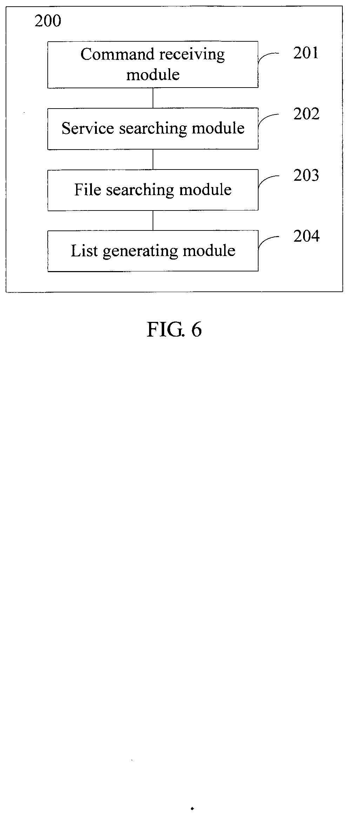

An embodiment of the present invention provides user equipment 200. As shown in FIG 6, the user equipment 200 includes:
a command receiving module 201, configured to receive a multimedia type selection command;
a service searching module 202, configured to search for a service device in a specified range, and determine a service device accessible with access permission, where
the service device stores a multimedia file;
a file searching module 203, configured to search the service device accessible with access permission for a multimedia file corresponding to the multimedia type selection command; and
a list generating module 204, configured to generate and display a multimedia file list according to the multimedia file corresponding to the multimedia type selection command.

The multimedia list includes name information of the multimedia file corresponding to the multimedia type selection command.

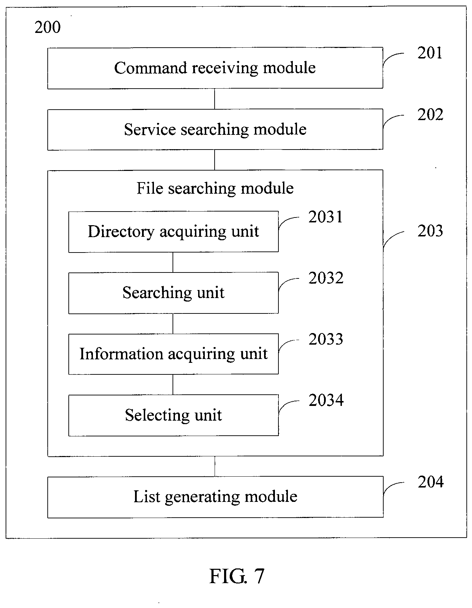

The multimedia display apparatus provided in this embodiment of the present invention receives a multimedia type selection command, searches for service devices in a specified range, determines service devices accessible with access permission, searches the service devices accessible with access permission for a multimedia file corresponding to the multimedia type selection command, and generates and displays a multimedia file list according to the multimedia file corresponding to the multimedia type selection command. In the prior art, a DLNA service device needs to be accessed repeatedly, and every time the DLNA service device is accessed, multiple commands of a user need to be received before a required multimedia file can be played. Compared with the prior art, in this solution, after receiving a multimedia type selection command, the apparatus traverses and accesses all found service devices accessible with access permission, generates and displays a multimedia file list according to a multimedia file that is corresponding to the multimedia type selection command and is in the service device, and displays found multimedia files at a time, thereby avoiding a problem of accessing the DLNA service device repeatedly, avoiding a need of receiving multiple commands of the user every time the DLNA service device is accessed, reducing time spent by the apparatus in searching for a multimedia file, and improving efficiency of searching for the multimedia file. Further, as shown in FIG 7, the file searching module 203 includes:
a directory acquiring unit 2031, configured to acquire a file directory from the service device accessible with access permission, where
the file directory includes name information of at least one file in the service device;
a searching unit 2032, configured to search for the at least one file according to the name information of the at least one file in the file directory;
an information acquiring unit 2033, configured to acquire file information of the at least one file according to the at least one file, where
the file information of the at least one file is used to distinguish a type of the at least one file; and
a selecting unit 2034, configured to select, from the at least one file according to the file information of the at least one file, the multimedia file corresponding to the multimedia type selection command.

The multimedia display apparatus provided in this embodiment of the present invention receives a multimedia type selection command; searches for service devices in a specified range; determines service devices accessible with access permission; acquires a file directory from the service devices accessible with access permission, and therefore, acquires file information of a file in the service devices; selects a multimedia file corresponding to the multimedia type selection command by using the file information; and generates and displays a multimedia file list according to the multimedia file corresponding to the multimedia type selection command. In the prior art, a DLNA service device needs to be accessed repeatedly, and every time the DLNA service device is accessed, multiple commands of a user need to be received before a required multimedia file can be played. Compared with the prior art, in this solution, after receiving a multimedia type selection command, the apparatus traverses and accesses all found service devices accessible with access permission, generates and displays a multimedia file list according to a multimedia file that is corresponding to the multimedia type selection command and is in the service device, and displays found multimedia files at a time, thereby avoiding a problem of accessing the DLNA service device repeatedly, avoiding a need of receiving multiple commands of the user every time the DLNA service device is accessed, reducing time spent by the apparatus in searching for a multimedia file, and improving efficiency of searching for the multimedia file.

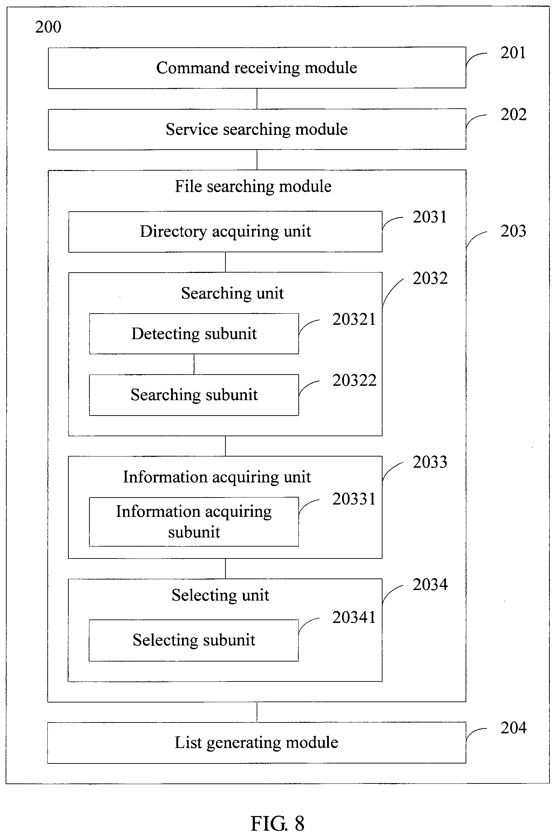

Still further, as shown in FIG 8, the searching unit 2032 includes:
a detecting subunit 20321, configured to detect whether a folder exists in the file directory, where
the folder includes at least one file; and
a searching subunit 20322, configured to search for the at least one file in the folder when the folder exists in the file directory.

The information acquiring unit 2033 includes:
an information acquiring subunit 20331, configured to acquire the file information of the at least one file in the folder according to the at least one file in the folder.

The selecting unit 2034 includes:
a selecting subunit 20341, configured to select, from the at least one file in the folder according to the file information of the at least one file in the folder, the multimedia file corresponding to the multimedia type selection command.

The multimedia display apparatus provided in this embodiment of the present invention receives a multimedia type selection command; searches for service devices in a specified range; determines service devices accessible with access permission, acquires a file directory from the service devices accessible with access permission, and therefore, acquires file information of a file in the service devices; selects a multimedia file corresponding to the multimedia type selection command by using the file information; and generates and displays a multimedia file list according to the multimedia file corresponding to the multimedia type selection command. In the prior art, a DLNA service device needs to be accessed repeatedly, and every time the DLNA service device is accessed, multiple commands of a user need to be received before a required multimedia file can be played. Compared with the prior art, in this solution, after receiving a multimedia type selection command, the user equipment traverses and accesses all found service devices accessible with access permission, generates and displays a multimedia file list according to a multimedia file that is corresponding to the multimedia type selection command and is in the service device, and displays found multimedia files at a time, thereby avoiding a problem of accessing the DLNA service device repeatedly, avoiding a need of receiving multiple commands of the user every time the DLNA service device is accessed, reducing time spent by the user equipment in searching for a multimedia file, and improving efficiency of searching for the multimedia file. When the file directory includes a folder, the folder is opened and a multimedia file corresponding to the multimedia type selection command is selected, thereby preventing omission of the multimedia file corresponding to the multimedia type selection command.

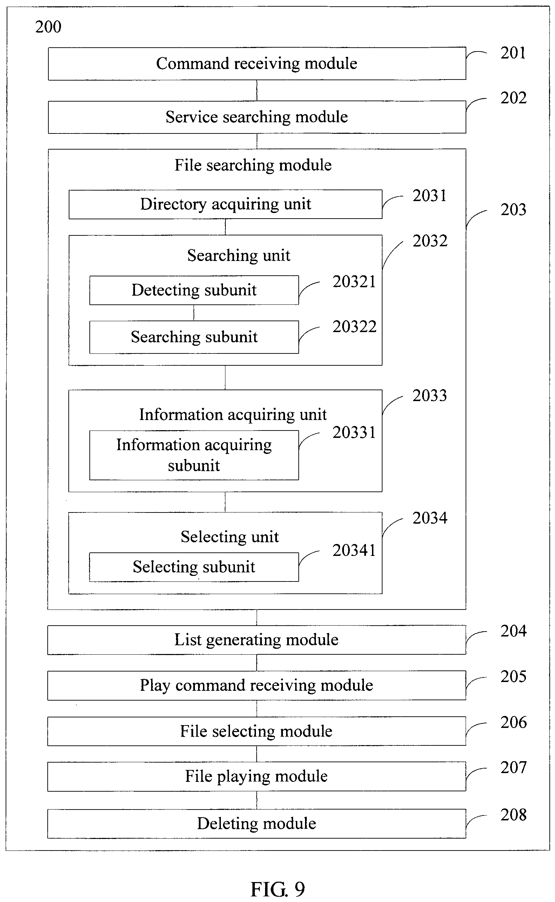

In addition, as shown in FIG 9, the user equipment 200 may further include:
a play command receiving module 205, configured to receive a selection play command, where
the selection play command is used to select a to-be-played multimedia file from the multimedia list;
a file selecting module 206, configured to acquire a multimedia file corresponding to the selection play command from the service device according to the selection play command;
a file playing module 207, configured to: download a first download part of the multimedia file into a buffer of the user equipment, and play the first download part; and
a deleting module 208, configured to delete the first download part of the multimedia file from the buffer of the user equipment.

The multimedia display apparatus provided in this embodiment of the present invention receives a multimedia type selection command; searches for service devices in a specified range; determines service devices accessible with access permission; acquires a file directory from the service devices accessible with access permission, and therefore, acquires file information of a file in the service devices; selects a multimedia file corresponding to the multimedia type selection command by using the file information; and generates and displays a multimedia file list according to the multimedia file corresponding to the multimedia type selection command. When a multimedia file is played, it may be downloaded while being played, and a played part of the multimedia file may be deleted. In the prior art, a DLNA service device needs to be accessed repeatedly, and every time the DLNA service device is accessed, multiple commands of a user need to be received before a required multimedia file can be played. Compared with the prior art, in this solution, after receiving a multimedia type selection command, the apparatus traverses and accesses all found service devices accessible with access permission, generates and displays a multimedia file list according to a multimedia file that is corresponding to the multimedia type selection command and is in the service device, and displays found multimedia files at a time, thereby avoiding a problem of accessing the DLNA service device repeatedly, avoiding a need of receiving multiple commands of the user every time the DLNA service device is accessed, reducing time spent by the apparatus in searching for a multimedia file, and improving efficiency of searching for the multimedia file. In addition, in a process of playing, storage resources occupied in the apparatus are reduced maximally, and a storage burden on a memory of the apparatus is also relieved.

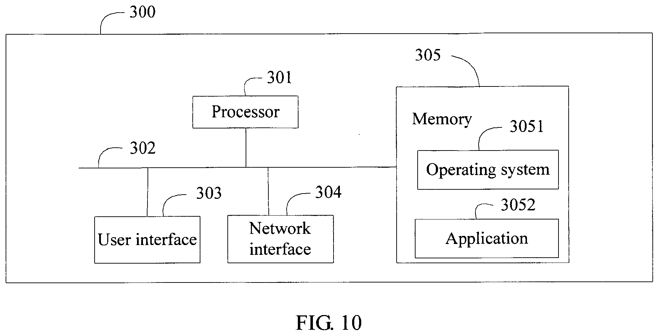

An embodiment of the present invention provides a multimedia display device 300. As shown in FIG 10, the multimedia display device 300 includes at least one processor 301 such as a CPU (Central Processing Unit, central processing unit), at least one network interface 304 or another user interface 303, a memory 305, and at least one communications bus 302. The communications bus 302 is used to implement connection and communication between these components. Optionally, the user interface 303 may be a display, a keyboard or a click device such as a mouse, a trackball, a touchpad or a touchscreen. Optionally, the memory 305 may include at least one storage apparatus located far away from the processor 301, such as a read-only memory (Read-Only Memory, ROM) or a random access memory (Random Access Memory, RAM); and the multimedia display device 300 may be specifically a vehicle-mounted play device or a home play device such as a vehicle-mounted player or a smart television.

In some implementation manners, the memory 305 stores the following elements, an executable module or a data structure, or a subset thereof, or an extension set thereof:
an operating system 3051, including various system programs, and configured to implement various basic services and handle hardware-based tasks; and
an application 3052, including various applications, and configured to implement various application services.

The application 3052 includes but is not limited to a command receiving module 201, a service searching module 202, a file searching module 203, a list generating module 204, a directory acquiring unit 2031, a searching unit 2032, an information acquiring unit 2033, a selecting unit 2034, a detecting subunit 20321, a searching subunit 20322, an information acquiring subunit 20331, a selecting subunit 20341, a play command receiving module 205, a file selecting module 206, a file playing module 207, and a deleting module 208.

For specific implementation of each module and each unit in the application 3052, reference may be made to corresponding modules and units in the embodiments shown in FIG 6 to FIG 9, and details are not described herein again. The processor 301 may acquire data such as the operating system 3051 and the application 3052 from the memory 305, so that the processor 301 runs or executes the data such as the operating system 3051 and the application 3052.

Specifically, the user interface 303 is configured to receive a multimedia type selection command.

The processor 301 is configured to: search for a service device in a specified range, and determine a service device accessible with access permission, where the service device stores a multimedia file; configured to search the service device accessible with access permission for a multimedia file corresponding to the multimedia type selection command; and configured to generate and display a multimedia file list according to the multimedia file corresponding to the multimedia type selection command, where the multimedia list includes name information of the multimedia file corresponding to the multimedia type selection command.

The memory 305 is configured to store the multimedia type selection command and the multimedia file list.

Further, the processor 301 is further configured to acquire a file directory from the service device accessible with access permission, where the file directory includes name information of at least one file in the service device; configured to search for the at least one file according to the name information of the at least one file in the file directory; configured to acquire file information of the at least one file according to the at least one file, where the file information of the at least one file is used to distinguish a type of the at least one file; and configured to select, from the at least one file according to the file information of the at least one file, the multimedia file corresponding to the multimedia type selection command.

Still further, the processor 301 is further configured to: detect whether a folder exists in the file directory, where the folder includes at least one file, and search for the at least one file in the folder when the folder exists in the file directory; configured to acquire the file information of the at least one file in the folder according to the at least one file in the folder; and configured to select, from the at least one file in the folder according to the file information of the at least one file in the folder, the multimedia file corresponding to the multimedia type selection command. In addition, the user interface 303 is further configured to receive a selection play command. The selection play command is used to select a to-be-played multimedia file from the multimedia list.

The processor 301 is further configured to: acquire a multimedia file corresponding to the selection play command from the service device according to the selection play command; and download a first download part of the multimedia file into a buffer of the user equipment, and play the first download part.

The processor 301 is further configured to delete the first download part of the multimedia file from the buffer of the user equipment.

The multimedia display device provided in this embodiment of the present invention can receive a multimedia type selection command; search for a service device in a specified range; determine a service device accessible with access permission; acquire a file directory from the service device accessible with access permission, and therefore, acquire file information of a file in the service device; select a multimedia file corresponding to the multimedia type selection command by using the file information; and generate and display a multimedia file list according to the multimedia file corresponding to the multimedia type selection command. When a multimedia file is played, it may be downloaded while being played, and a played part of the multimedia file may be deleted. In the prior art, a DLNA service device needs to be accessed repeatedly, and every time the DLNA service device is accessed, multiple commands of a user need to be received before a required multimedia file can be played. Compared with the prior art, in this solution, after receiving a multimedia type selection command, the multimedia display device traverses and accesses all found service devices accessible with access permission, generates and displays a multimedia file list according to a multimedia file that is corresponding to the multimedia type selection command and is in the service device, and displays found multimedia files at a time, thereby avoiding a problem of accessing the DLNA service device repeatedly, avoiding a need of receiving multiple commands of the user every time the DLNA service device is accessed, reducing time spent by the multimedia display device in searching for a multimedia file, and improving efficiency of searching for the multimedia file. When the file directory includes a folder, the folder is opened to acquire a multimedia file, thereby preventing omission of a multimedia file corresponding to the multimedia type selection command. In addition, in a process of playing, storage resources occupied in the multimedia display device are reduced maximally, and a storage burden on a memory of the multimedia display device is also relieved. The embodiments in this specification are all described in a progressive manner, for same or similar parts in the embodiments, reference may be made to these embodiments, and each embodiment focuses on a difference from other embodiments. Especially, a device embodiment is basically similar to a method embodiment, and therefore is described briefly; for related parts, reference may be made to partial descriptions in the method embodiment.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The storage medium may include: a magnetic disk, an optical disc, a read-only memory (Read-Only Memory, ROM), or a random access memory (Random Access Memory, RAM).

The foregoing descriptions are merely specific embodiments of the present invention, but are not intended to limit the protection scope of the present invention. Therefore, the protection scope of the present invention shall be subject to the protection scope of the claims.

## Claims

1. A multimedia display method, comprising:
displaying, by a user equipment (200, 300), at least one type of multimedia file icon;
receiving (101), by the user equipment (200, 300), a multimedia type selection command directed to a first type of multimedia file icon from the at least one type of multimedia file icon;
searching (102), by the user equipment (200, 300), for service devices in a range covered by a wireless local area network connected to the user equipment (200, 300),
acquiring (1031), by the user equipment (200, 300), a file directory from each one of the found service devices accessible with access permission,
for each one of the found service devices accessible with access permission: detecting (10321), by the user equipment (200, 300), a folder in the file directory of the respective one of the found service devices, and searching (10322) for at least one multimedia file in said folder, wherein said folder comprises at least one multimedia file, and acquiring (10331), by the user equipment (200, 300), at least one multimedia file information of the at least one multimedia file in said folder or said folders,
generating and displaying (104), by the user equipment (200, 300), a multimedia file list comprising the at least one multimedia file information;
receiving (105), by the user equipment (200, 300), a selection play command for selecting first multimedia file information from the at least one multimedia file information in the multimedia file list;
wherein the user equipment (200, 300) communicates with the found service devices via a Digital Living Network Alliance, DLNA, protocol,
wherein, after receiving the multimedia type selection command, the user equipment (200, 300) traverses and accesses all the found service devices accessible with access permission, generates and displays the multimedia file list according to the at least one multimedia file that is corresponding to the multimedia type selection command and is in the found service devices, and displays the at least one found multimedia file at a time, thereby avoiding repeatedly accessing the service devices upon receiving the multimedia type selection command.

2. The method according to claim 1, wherein the first multimedia file information comprises name information, album information and author information.

3. The method according to any one of claims 1 to 2, wherein the at least one type of multimedia file icon comprises a music icon, a video icon, and an image icon.

4. A user equipment (200, 300), comprising:
at least one processor (301); and
a memory (305) coupled to the at least one processor (301) and storing programming instructions that, when executed by the at least one processor (301), cause the user equipment (200, 300) to
display at least one type of multimedia file icon;
receive a multimedia type selection command directed to a first type of multimedia file icon from the at least one type of multimedia file icon;
cause the user equipment (200, 300) to search for service devices in a range covered by a wireless local area network connected to the user equipment (200, 300),
acquire a file directory from each one of the found service devices accessible with access permission,
for each one of the found service devices accessible with access permission, detect a folder in the file directory of the respective one of the found service devices, and search for at least one multimedia file in said folder, wherein said folder comprises at least one multimedia file,
acquire at least one multimedia file information of the at least one multimedia file in said folder or said folders,
generate and display a multimedia file list comprising the at least one multimedia file information;
receive a selection play command for selecting first multimedia file information from the at least one multimedia file information in the multimedia file list;
wherein the user equipment (200, 300) is configured to communicate with the at least one found service device via a DLNA, Digital Living Network Alliance, protocol,
after receiving the multimedia type selection command, to traverses and access all the found service devices accessible with access permission, generate and display the multimedia file list according to the at least one multimedia file that is corresponding to the multimedia type selection command and is in the found service devices, and display the at least one found multimedia file at a time, thereby avoiding repeatedly accessing the found service devices upon receiving the multimedia type selection command.

5. The user equipment (200, 300) according to claim 4, wherein the first multimedia file information comprises name information, album information and author information.

6. The user equipment (200, 300) according to any one of claims 4 and 5, wherein the at least one type of multimedia file icon comprises a music icon, a video icon, and an image icon.

7. A non-transitory computer-readable storage medium comprising instructions which, when executed by a computer, cause the computer to carry out the method according to any one of claims 1 to 3.

## Patentansprüche

1. Multimedia-Anzeigeverfahren, umfassend:
Anzeigen mindestens eines Typs von Multimediadateisymbol durch ein Benutzergerät (200, 300);
Empfangen (101) eines Befehls zur Auswahl eines Multimediatyps durch das Benutzergerät (200, 300), der auf einen ersten Typ von Multimediadateisymbol aus dem mindestens einen Typ von Multimediadateisymbol gerichtet ist;
Suchen (102) durch das Benutzergerät (200, 300) nach Dienstvorrichtungen in einem Bereich, der durch ein mit dem Benutzergerät (200, 300) verbundenes drahtloses lokales Netzwerk abgedeckt wird,
Erfassen (1031) eines Dateiverzeichnisses aus jeder der gefundenen Dienstvorrichtungen, die mit Zugriffserlaubnis zugreifbar ist, durch das Benutzergerät (200, 300),
für jede der gefundenen Dienstvorrichtungen, die mit Zugriffserlaubnis zugreifbar ist:
Erkennen (10321) eines Ordners in dem Dateiverzeichnis der betreffenden der gefundenen Dienstvorrichtungen durch das Benutzergerät (200, 300) und Suchen (10322) nach mindestens einer Multimediadatei in dem Ordner, wobei der Ordner mindestens eine Multimediadatei umfasst, und Erfassen (10331) mindestens einer Multimediadateiinformation der mindestens einen Multimediadatei in dem Ordner oder den Ordnern durch das Benutzergerät (200, 300),
Erzeugen und Anzeigen (104) einer Multimediadateiliste, die die mindestens eine Multimediadateiinformation enthält, durch das Benutzergerät (200, 300);
Empfangen (105) eines Auswahlwiedergabebefehls durch das Benutzergerät (200, 300) zum Auswählen einer ersten Multimediadateiinformation aus der mindestens einen Multimediadateiinformation in der Multimediadateiliste;
wobei das Benutzergerät (200, 300) mit den gefundenen Dienstvorrichtungen über ein "Digital Living Network Alliance"-, DLNA-, Protokoll kommuniziert,
wobei nach dem Empfangen des Befehls zur Auswahl des Multimediatyps das Benutzergerät (200, 300) alle gefundenen Dienstvorrichtungen, die mit einer Zugriffserlaubnis zugreifbar sind, durchläuft und darauf zugreift,
die Multimediadateiliste gemäß der mindestens einen Multimediadatei, die dem Befehl zur Auswahl des Multimediatyps entspricht und sich in den gefundenen Dienstvorrichtungen befindet, erzeugt und anzeigt und die mindestens eine gefundene Multimediadatei auf einmal anzeigt, wodurch ein wiederholtes Zugreifen auf die Dienstvorrichtungen beim Empfangen des Befehls zur Auswahl des Multimediatyps vermieden wird.

2. Verfahren gemäß Anspruch 1, wobei die erste Multimediadateiinformation eine Namensinformation, Albuminformation und Autoreninformation umfasst.

3. Verfahren gemäß einem der Ansprüche 1 bis 2, wobei der mindestens eine Typ von Multimediadateisymbol ein Musik-Symbol, ein Video-Symbol und ein Bild-Symbol umfasst.

4. Benutzergerät (200, 300), umfassend:
mindestens einen Prozessor (301); und
einen Speicher (305), der mit dem mindestens einen Prozessor (301) gekoppelt ist und Programmieranweisungen speichert, die bei Ausführung durch den mindestens einen Prozessor (301) das Benutzergerät (200, 300) veranlassen,
mindestens einen Typ von Multimediadateisymbol anzuzeigen;
einen Befehl zur Auswahl des Multimediatyps zu empfangen, der auf einen ersten Typ von Multimediadateisymbol aus dem mindestens einen Typ von Multimediadateisymbol gerichtet ist;
das Benutzergerät (200, 300) zu veranlassen, nach Dienstvorrichtungen in einem Bereich zu suchen, der durch ein mit dem Benutzergerät (200, 300) verbundenes drahtloses lokales Netzwerk abgedeckt wird,
ein Dateiverzeichnis aus jeder der gefundenen Dienstvorrichtungen zu erfassen, die mit Zugriffserlaubnis zugreifbar sind,
für jede der gefundenen Dienstvorrichtungen, die mit Zugriffserlaubnis zugreifbar sind, einen Ordner im Dateiverzeichnis der betreffenden der gefundenen Dienstvorrichtungen zu erkennen und nach mindestens einer Multimediadatei in dem Ordner zu suchen, wobei der Ordner mindestens eine Multimediadatei umfasst,
mindestens eine Multimediadateiinformation der mindestens einen Multimediadatei in dem Ordner oder den Ordnern zu erfassen,
eine Multimediadateiliste zu erzeugen und anzuzeigen, die die mindestens eine Multimediadateiinformation umfasst;
einen Auswahlwiedergabebefehl zum Auswählen einer ersten Multimediadateiinformation aus der mindestens einen Multimediadateiinformation in der Multimediadateiliste zu empfangen;
wobei das Benutzergerät (200, 300) dafür konfiguriert ist, mit der mindestens einen gefundenen Dienstvorrichtung über ein DLNA-, "Digital Living Network Alliance"-, Protokoll zu kommunizieren,
nach Empfangen des Befehls zur Auswahl des Multimediatyps alle gefundenen Dienstvorrichtungen, die mit einer Zugriffserlaubnis zugreifbar sind, zu durchlaufen und darauf zuzugreifen,
die Multimediadateiliste gemäß der mindestens einen Multimediadatei, die dem Befehl zur Auswahl des Multimediatyps entspricht und sich in den gefundenen Dienstvorrichtungen befindet, zu erzeugen und anzuzeigen und die mindestens eine gefundene Multimediadatei auf einmal anzuzeigen, wodurch ein wiederholtes Zugreifen auf die gefundenen Dienstvorrichtungen beim Empfangen des Befehls zur Auswahl des Multimediatyps vermieden wird.

5. Benutzergerät (200, 300) gemäß Anspruch 4, wobei die erste Multimediadateiinformation eine Namensinformation, Albuminformation und Autoreninformation umfasst.

6. Benutzergerät (200, 300) gemäß einem der Ansprüche 4 und 5, wobei der mindestens eine Typ von Multimediadateisymbol ein Musik-Symbol, ein Video-Symbol und ein Bild-Symbol umfasst.

7. Nichtflüchtiges computerlesbares Speichermedium, umfassend Anweisungen, die beim Ausführen durch einen Computer den Computer veranlassen, das Verfahren gemäß einem der Ansprüche 1 bis 3 durchzuführen.

## Revendications

1. Procédé d'affichage multimédia, comprenant :
l'affichage, par un équipement d'utilisateur (200, 300), d'au moins un type d'icône de fichier multimédia ;
la réception (101), par l'équipement d'utilisateur (200, 300), d'une commande de sélection de type de multimédia orientée vers un premier type d'icône de fichier multimédia depuis l'au moins un type d'icône de fichier multimédia ;
la recherche (102), par l'équipement d'utilisateur (200, 300), de dispositifs de service dans une plage couverte par un réseau local sans fil connecté à l'équipement d'utilisateur (200, 300),
l'acquisition (1031), par l'équipement d'utilisateur (200, 300), d'un répertoire de fichiers provenant de chacun des dispositifs de service trouvés accessibles avec une permission d'accès,
pour chacun des dispositifs de service trouvés accessibles avec une permission d'accès : la détection (10321), par l'équipement d'utilisateur (200, 300), d'un dossier dans le répertoire de fichiers de celui respectif parmi les dispositifs de service trouvés, et la recherche (10322) d'au moins un fichier multimédia dans ledit dossier, dans lequel ledit dossier comprend au moins un fichier multimédia, et l'acquisition (10331), par l'équipement d'utilisateur (200, 300), d'au moins une partie d'informations de fichier multimédia de l'au moins un fichier multimédia dans ledit dossier ou lesdits dossiers, la génération et l'affichage (104), par l'équipement d'utilisateur (200, 300), d'une liste de fichiers multimédia comprenant l'au moins une partie d'informations de fichier multimédia ;
la réception (105), par l'équipement d'utilisateur (200, 300), d'une commande de lecture de sélection pour sélectionner les premières informations de fichier multimédia parmi l'au moins une partie d'informations de fichier multimédia dans la liste de fichiers multimédia ;
dans lequel l'équipement d'utilisateur (200, 300) communique avec les dispositifs de service trouvés par le biais d'un protocole Digital living network alliance, DLNA,
dans lequel, après la réception de la commande de sélection de type de multimédia, l'équipement d'utilisateur (200, 300) traverse et accède à tous les dispositifs de service trouvés accessibles avec une permission d'accès, génère et affiche la liste de fichiers multimédia en fonction de l'au moins un fichier multimédia qui correspond à la commande de sélection de type de multimédia et qui se trouve parmi les dispositifs de service trouvés, et affiche l'au moins un fichier multimédia trouvé un par un, ce qui permet d'éviter l'accès répétitif aux dispositifs de service suite à la réception de la commande de sélection de type de multimédia.

2. Procédé selon la revendication 1, dans lequel la première partie d'informations de fichier multimédia comprend des informations de nom, des informations d'album et des informations d'auteur.

3. Procédé selon l'une quelconque des revendications 1 et 2, dans lequel l'au moins un type d'icône de fichier multimédia comprend une icône de musique, une icône de vidéo et une icône d'image.

4. Équipement d'utilisateur (200, 300), comprenant :
au moins un processeur (301) ; et
une mémoire (305) couplée à l'au moins un processeur (301) et stockant des instructions de programmation qui, lorsqu'elles sont exécutées par l'au moins un processeur (301), amènent l'équipement d'utilisateur (200, 300) à afficher au moins un type d'icône de fichier multimédia ;
recevoir une commande de sélection de type de multimédia orientée vers un premier type d'icône de fichier multimédia depuis l'au moins un type d'icône de fichier multimédia ;
amener l'équipement d'utilisateur (200, 300) à rechercher des dispositifs de service dans une plage couverte par un réseau local sans fil connecté à l'équipement d'utilisateur (200, 300),
acquérir un répertoire de fichiers provenant de chacun des dispositifs de service trouvés accessibles avec une permission d'accès,
pour chacun des dispositifs de service trouvés accessibles avec une permission d'accès, détecter un dossier dans le répertoire de fichiers de celui respectif parmi les dispositifs de service trouvés, et rechercher au moins un fichier multimédia dans ledit dossier, dans lequel ledit dossier comprend au moins un fichier multimédia,
acquérir au moins une partie d'informations de fichier multimédia de l'au moins un fichier multimédia dans ledit dossier ou lesdits dossiers,
générer et afficher une liste de fichiers multimédia comprenant l'au moins une partie d'informations de fichier multimédia ;
recevoir une commande de lecture de sélection pour sélectionner les premières informations de fichier multimédia parmi l'au moins une partie d'informations de fichier multimédia dans la liste de fichiers multimédia ;
dans lequel l'équipement d'utilisateur (200, 300) est configuré pour communiquer avec l'au moins un dispositif de service trouvé par le biais d'un protocole Digital living network alliance, DLNA,
après la réception de la commande de sélection de type de multimédia, traverser et accéder à tous les dispositifs de service trouvés accessibles avec une permission d'accès,
générer et afficher la liste de fichiers multimédia en fonction de l'au moins un fichier multimédia qui correspond à la commande de sélection de type de multimédia et qui se trouve parmi les dispositifs de service trouvés, et afficher l'au moins un fichier multimédia trouvé un par un, ce qui permet d'éviter l'accès répétitif aux dispositifs de service trouvés suite à la réception de la commande de sélection de type de multimédia.

5. Équipement d'utilisateur (200, 300) selon la revendication 4, dans lequel la première partie d'informations de fichier multimédia comprend des informations de nom, des informations d'album et des informations d'auteur.

6. Équipement d'utilisateur (200, 300) selon l'une quelconque des revendications 4 et 5, dans lequel l'au moins un type d'icône de fichier multimédia comprend une icône de musique, une icône de vidéo et une icône d'image.

7. Support de stockage non transitoire lisible par ordinateur comprenant des instructions qui, lorsqu'elles sont exécutées par un ordinateur, amènent l'ordinateur à exécuter le procédé selon l'une quelconque des revendications 1 à 3.
